(19)

**Europäisches Patentamt**

**European Patent Office**

**Office européen des brevets**

(11) **EP 4 625 405 A1**

(12) **EUROPEAN PATENT APPLICATION**

(43) Date of publication:
01.10.2025 Bulletin 2025/40

(21) Application number: 24305459.0

(22) Date of filing: **27.03.2024**

(51) International Patent Classification (IPC):
**G09G 5/10** *(2006.01)*     **H04N 19/46** *(2014.01)*

(52) Cooperative Patent Classification (CPC):
**G09G 5/10; G09G 5/003; H04N 19/46;**
G09G 2330/021; G09G 2360/16; G09G 2370/04;
G09G 2370/10

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **InterDigital CE Patent Holdings, SAS**
**75017 Paris (FR)**

(72) Inventors:
• **AUMONT, Franck**
**35770 VERN SUR SEICHE (FR)**

• **LE MEUR, Olivier**
**35160 TALENSAC (FR)**
• **DEMARTY, Claire-Helene**
**35520 MONTREUIL LE GAST (FR)**
• **REINHARD, Erik**
**35630 HEDE-BAZOUGES (FR)**
• **TOUZE, David**
**35200 RENNES (FR)**

(74) Representative: **Interdigital**
**Immeuble ZEN 2**
**845 A, avenue des Champs Blancs**
**35510 Cesson-Sévigné (FR)**

(54) **DISPLAY ENERGY REDUCTION MDCV MESSAGE**

(57)     A method comprising:
determining (101) energy aware metadata and inserting the energy aware metadata in Mastering Display Colour Volume metadata, the Mastering Display Colour Volume metadata being determined by analyzing a distribution of tones of a master video content, the energy aware metadata allowing controlling an energy consumed for displaying a second video representative of the master video content; and encoding a first video representative of the master video content and the Mastering Display Colour Volume metadata into video data, the Mastering Display Colour Volume metadata being encoded in a Mastering Display Colour Volume SEI message.

HDR video energy aware mastering — 101

SDR video generation — 112

HDR dynamic metadata generation — 113

Fig. 3A

**Description**

1. TECHNICAL FIELD

At least one of the present embodiments generally relates to the field of distribution and display of High Dynamic Range (HDR) video and more particularly to a method and a device for controlling an energy consumed for displaying HDR video.

2. BACKGROUND

Recent advancements in display technologies allow for an extended dynamic range of color, luminance and contrast in images to be displayed. The term *image* refers here to an image content that can be for example a video or a still picture or image.

High-dynamic-range video (HDR video) describes video having a dynamic range greater than that of standard-dynamic-range video (SDR video). HDR-video based applications involve capture, production, content/encoding, and display. HDR capture and display devices are capable of brighter whites and deeper blacks. To accommodate this, HDR encoding standards allow for a higher maximum luminance and use at least a 10-bit dynamic range (compared to 8-bit (for non-professional) and 10-bit (for professional) dynamic ranges for SDR video) in order to maintain precision across this extended range.

HDR technology offers a better viewer experience (or Quality of Experience (QoE)) of video contents, but the energy consumption is much more significant than SDR. Indeed, the display of a HDR video consumes up to two times more energy than a SDR video. A current trend in many domains being to reduce the consumption of energy, it is desirable to overcome the above drawbacks.

It is particularly desirable to propose a solution allowing controlling or reducing the energy consumed by the display of HDR videos while preserving as much as possible the improvement of the QoE provided by the HDR technology and the artistic intent of the content creator.

3. BRIEF SUMMARY

In a first aspect, one or more of the present embodiments provide a method comprising:
determining energy aware metadata and inserting the energy aware metadata in Mastering Display Colour Volume metadata, the Mastering Display Colour Volume metadata being determined by analyzing a distribution of tones of a master video content, the energy aware metadata allowing controlling an energy consumed for displaying a second video representative of the master video content; and encoding a first video representative of the master video content and the Mastering Display Colour Volume metadata into video data, the Mastering Display Colour Volume metadata being encoded in a Mastering Display Colour Volume SEI message.

In an embodiment, the first video is a standard dynamic range video generated from the master video content and the second video is a high dynamic range video and the method further comprises generating additional metadata allowing transforming the standard dynamic range video into the high dynamic range video and encoding the additional metadata in a SL-HDR information SEI message.

In an embodiment, responsive to a first value of a flag of the SL-HDR information SEI message, data representing the Mastering Display Colour Volume metadata are encoded in the SL-HDR information SEI message.

In an embodiment, the Mastering Display Colour Volume metadata are signaled per period or per picture or per set of pictures of the master video content or depending on scene cuts or events in the master video content or based on a distribution of the tones in pictures of the master video content.

In a second aspect, one or more of the present embodiments provide a method comprising:

receiving video data comprising Mastering Display Colour Volume metadata;
modifying or introducing energy aware metadata in the Mastering Display Colour Volume metadata, and transmitting the video data with the Mastering Display Colour Volume metadata.

In a third aspect, one or more of the present embodiments provide a method comprising:

obtaining a first video and a Mastering Display Colour Volume SEI message from video data, the Mastering Display Colour Volume SEI message comprising Mastering Display Colour Volume metadata comprising energy aware metadata, the energy aware metadata allowing controlling an energy consumed for displaying the first video;
deriving a target peak luminance value from the energy aware metadata;
applying a display adaptation process to the first video based on the determined target peak luminance value to obtain a second video.

In an embodiment, the first video is a first high dynamic range video reconstructed from a standard dynamic range video using additional metadata allowing transforming the standard dynamic range video into the first high dynamic range video, the additional metadata being obtained from a SL-HDR information SEI message, and the second video is a second high dynamic range video.

In an embodiment, responsive to a first value of a flag of the SL-HDR information SEI message, data representing the Mastering Display Colour Volume metadata are encoded in the SL-HDR information SEI message.

In a fourth aspect, one or more of the present embodiments provide a device comprising electronic circuitry configured for:

determining energy aware metadata and inserting the energy aware metadata in Mastering Display Colour Volume metadata, the Mastering Display Colour Volume metadata being determined by analyzing a distribution of tones of a master video content, the energy aware metadata allowing controlling an energy consumed for displaying a second video representative of the master video content; and

encoding a first video representative of the master video content and the Mastering Display Colour Volume metadata into video data, the Mastering Display Colour Volume metadata being encoded in a Mastering Display Colour Volume SEI message.

In an embodiment, the first video is a standard dynamic range video generated from the master video content and the second video is a high dynamic range video and the electronic circuitry is further configured for generating additional metadata allowing transforming the standard dynamic range video into the high dynamic range video and encoding the additional metadata in a SL-HDR information SEI message.

In an embodiment, responsive to a first value of a flag of the SL-HDR information SEI message, data representing the Mastering Display Colour Volume metadata are encoded in the SL-HDR information SEI message.

In an embodiment, the Mastering Display Colour Volume metadata are signaled per period or per picture or per set of pictures of the master video content or depending on scene cuts or events in the master video content or based on a distribution of the tones in pictures of the master video content.

In a fifth aspect, one or more of the present embodiments provide a device comprising electronic circuitry configured for:

receiving video data comprising Mastering Display Colour Volume metadata;

modifying or introducing energy aware metadata in the Mastering Display Colour Volume metadata,

and transmitting the video data with the Mastering Display Colour Volume metadata.

In a sixth aspect, one or more of the present embodiments provide a device comprising electronic circuitry configured for:

obtaining a first video and a Mastering Display Colour Volume SEI message from video data, the MDCV SEI message comprising Mastering Display Colour Volume metadata comprising energy aware metadata, the energy aware metadata allowing controlling an energy consumed for displaying the first video;

deriving a target peak luminance value from the energy aware metadata;

applying a display adaptation process to the first video based on the determined target peak luminance value to obtain a second video.

In an embodiment, the first video is a first high dynamic range video reconstructed from a standard dynamic range video using additional metadata allowing transforming the standard dynamic range video into the first high dynamic range video, the additional metadata being obtained from a SL-HDR information SEI message, and the second video is a second high dynamic range video.

In an embodiment, responsive to a first value of a flag of the SL-HDR information SEI message, data representing the Mastering Display Colour Volume metadata are encoded in the SL-HDR information SEI message.

In a seventh aspect, one or more of the present embodiments provide a signal representing video data comprising Mastering Display Colour Volume metadata comprising energy aware metadata.

In a eighth aspect, one or more of the present embodiments provide a non-transitory information storage medium storing program code instructions for implementing the method according to the first, the second or the third aspect.

In a ninth aspect, one or more of the present embodiments provide a computer program comprising program code instructions for implementing the method according to the first, the second or the third aspect.

4. BRIEF SUMMARY OF THE DRAWINGS

Fig. 1 illustrates schematically an example of context in which the various embodiments are implemented;
Fig. 2 details various modules of a video sender system and of a video receiver system;
Fig. 3A illustrates schematically a process of generation of energy-aware information;
Fig. 3B illustrates schematically a process of use of the energy-aware information for generating a HDR video;
Fig. 4A illustrates schematically an example of hardware architecture of a processing module able to implement various aspects and embodiments;
Fig. 4B illustrates a block diagram of an example of a first system in which various aspects and embodiments are implemented; and,
Fig. 4C illustrates a block diagram of an example of a second system in which various aspects and embodiments are implemented.

5. DETAILED DESCRIPTION

The various embodiments proposed in the following relates to a global video chain (production, encoding, transmission, decoding and display rendering) in which a reduction of an overall energy consumption is applied. This video chain allows distributing a compressed HDR video in the form of one SDR video with a limited dynamic range and some dynamic metadata. Both are inserted in a same bitstream (i.e., in same video data) and are distributed to a receiver (i.e., Integrated Receiver Device (IRD)). Using the dynamic metadata, the receiver reconstructs the original HDR video. In this context, a HDR to HDR display adaptation process which takes place at the receiver side, is used to reduce a dynamic range of the displayed HDR video, relatively to a dynamic range of the original HDR video, to reduce the display energy consumption. More precisely, the display adaptation reduces a peak luminance of the displayed HDR video $L_{pdisp}$ so that it is between a peak luminance of the transmitted SDR video $L_{SDR}$ and the peak luminance of the original HDR video $L_{HDR}$.

$$L_{SDR} \leq L_{pdisp} \leq L_{HDR}$$

Artistic intent friendly display adaptation methods were developed. Such display adaptation methods allow getting the highest QoE and preserving the artistic intent in the displayed HDR video. For instance, display adaptation adjusts tones to preserve highlights which cannot be clipped.

To make possible a trade-off between energy consumption and QoE, various embodiments described in the following propose an adjustment of the peak luminance at a content production side and a transmission of peak luminance reduction information (i.e., energy-aware information) over the network up to the receiver in the form of metadata in order to use it during the reconstruction of the HDR video to be displayed.

Even if the luminance is decreased, the highest QoE (for the given targeted luminance) and the creator intent are kept by adjusting the tones to avoid clipping or burning the highlights.

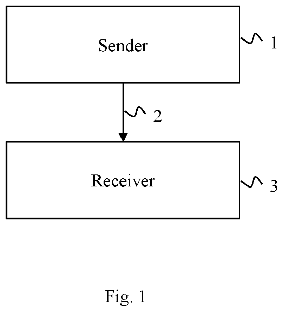

**Fig. 1** illustrates schematically an example of context in which the various embodiments are implemented.

In Fig. 1, a system 1 transmits video data to a system 3 via a network 2.

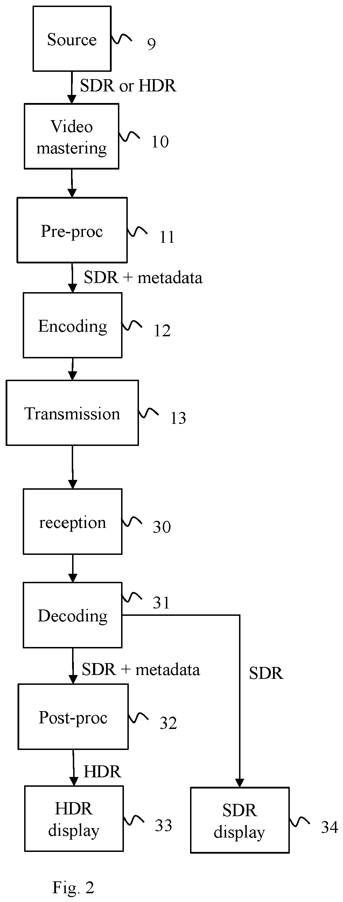

**Fig. 2** details various modules of the system 1 (video sender system) and the system 2 (video receiver system).

The system 1 comprises a source device 9, such as a camera generating an initial video content or a streaming system providing an initial video content. The source device 9 is for instance a SDR or HDR camera generating respectively an initial SDR or HDR video content.

The initial video content is then provided to a video mastering module (or post production module) 10 that applies a post-production (a luminance grading, a color grading, special effects, etc) on the initial video content to generate a master video content. Typically, the artistic intent is introduced in the initial video content by the video mastering module 10. In addition to the master video content, the video mastering module 10 generates Mastering Display Color Volume (MDCV) metadata. The MDCV metadata (defined in document SMPTE ST 2086) describe a color volume of a mastering display (i.e. color primaries, a white point and a maximum and minimum luminance). A mastering display is a hypothetical monitor used for viewing while authoring a video content by a content creator when applying the post-production. Various embodiments describe a video mastering module embedding additional energy aware metadata representing energy-aware information in the MDCV metadata and a syntax of MDCV metadata embedding additional energy aware metadata.

The master video content and the MDCV metadata generated by the video mastering module 10 is then provided to a pre-processing module 11 of the system 1. The pre-processing module 11, for example, adapts a video content to a SL-HDRx standard. For instance, the SL-HDRx standard is SL-HDR1. Therefore, when the master video content is a HDR video, the pre-processing module 11 applies a tone mapping (TM) to the HDR video to generate a SDR video and generates metadata compatible with the standard SL-HDR1 (i.e., SL-HDR1 metadata). When the master video content is a SDR video, the pre-processing module first estimates a HDR video and then applies a TM to the estimated HDR video to generate a SDR video. In this second case also, the pre-processing module 11 generates SL-HDR1 metadata. The HDR video (i.e., the master video content) inputted to the pre-processing module 11 has a peak of luminance called *master display peak luminance* representing a peak luminance defined by a content creator corresponding to $L_{HDR}$ above. The SL-HDR1 metadata comprise information representative of an inverse tone mapping function and of a color correction function allowing to obtain a HDR video from a SDR video. These metadata may be dynamic and adapted to each image or group of images.

The SDR video, the SL-HDR1 metadata and the MDCV metadata are then provided to an encoding module 12. The SDR video, the SL-HDR1 metadata and the energy-aware additional metadata are encoded by the encoding module 12 in a bitstream (i.e., in video data) using a video compression format such as AVC ((ISO/CEI 14496-10 / ITU-T H.264), HEVC (ISO/IEC 23008-2 - MPEG-H Part 2, High Efficiency Video Coding / ITU-T H.265)), VVC (ISO/IEC 23090-3 - MPEG-I, Versatile Video Coding/ ITU-T H.266), AV1,VP9, EVC (ISO/CEI 23094-1 Essential Video Coding) or any other video compression format adapted to encode a SDR video and SL-HDR1 metadata. For example, the SL-HDR1 metadata and the MDCV metadata are encoded in the form of SEI (supplemental enhancement information) message. The output of the encoding module 12 is a bitstream (i.e., video data) representing the encoded SDR video, the SL-HDR1 metadata and the MDCV metadata.

The bitstream is then provided to a transmitting module 13 comprised in the system 1. The transmitting module 13 transmits the bitstream to the system 3 via the network 2.

The system 3 comprises a receiving module 30 receiving the bitstream.

The bitstream is then provided to a decoding module 31 comprised in the system 3. The decoding module 31 decodes the bitstream to obtain a decoded (i.e., reconstructed) version of the SDR video, the SL-HDR1 metadata and the MDCV metadata.

The reconstructed SDR video is provided directly to a display device 34 adapted to display SDR contents.

The SDR video, the SL-HDR1 metadata and the MDCV metadata are provided to a post-processing module 32. The post-processing module 32 applies an inverse tone mapping (ITM) step and a color correction step to the SDR video to obtain an output HDR video based on the SL-HDR1 metadata.

The color correction comprises a computation of a Look-Up-Table (LUT) *lutCC()* from the SL-HDR1 metadata. The LUT *lutCC()* is then used to reconstruct the HDR chrominance signal of the HDR video.

For both constant luminance (CL) and non-constant luminance (NCL) modes, $lutCC(Y) = f(Y).(1/Y)$ with $f(Y) = 1 / (R . sgf(1/Y))$ and Y being a value representative of a luminance. Function *sgf(1/Y)* corresponds to the color correction function encoded in the SL-HDR1 metadata.

In NCL mode, *f(Y)* is a constant function, i.e., $f(Y) = \Omega$ so that $lutCC(Y) = \Omega.(1/Y)$.

In CL mode, *f(Y)* is not a constant function.

The ITM step comprises a derivation of a LUT *lutMapY()* from the SL-HDR1 metadata. The LUT *lutMapY()* is then used to perform the inverse tone mapping of the luminance signal of the SDR video to reconstruct the HDR luminance signal of the HDR video.

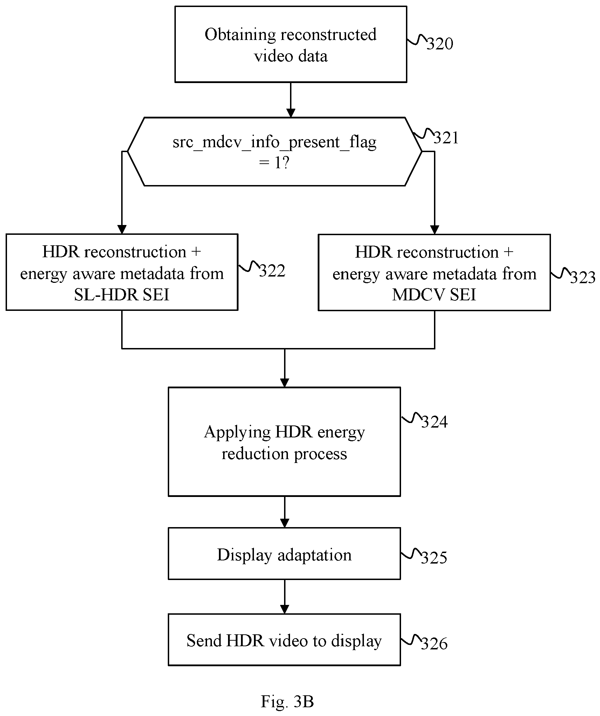

In an embodiment, the post-processing module 32 applies a display adaptation process using additional energy-aware metadata embedded in the MDCV metadata as detailed later in relation to Fig. 3B. The display adaptation process is for example the one described in Annex E of ETSI TS 103.433.

The output HDR video (eventually, on which had been applied the display adaption), is then provided to a HDR display 33 adapted to display HDR contents. When present, the energy-aware information allows controlling an energy consumed for displaying the HDR video on the system 3 side.

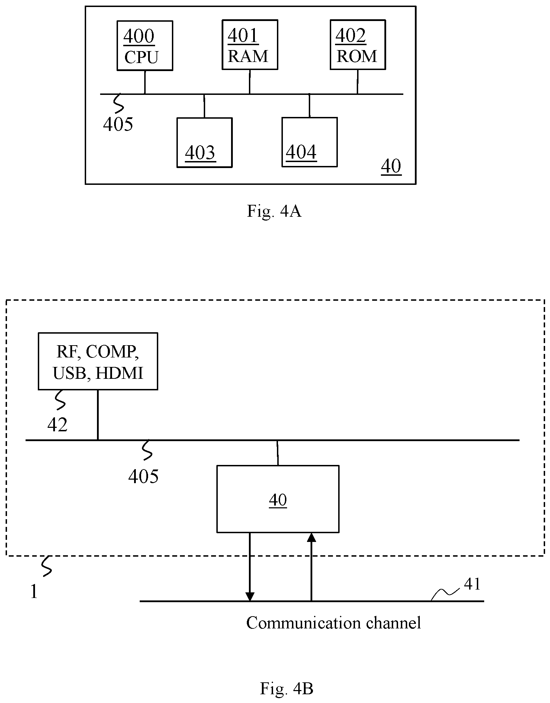

**Fig. 4A** illustrates schematically an example of hardware architecture of a processing module 40 used for instance in the pre-processing module 11 or in the post-processing module 32. The processing module 40 comprises, connected by a communication bus 405: a processor or CPU (central processing unit) 400 encompassing one or more microprocessors, general purpose computers, special purpose computers, and processors based on a multi-core architecture, as non-limiting examples; a random access memory (RAM) 401; a read only memory (ROM) 402; a storage unit 403, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive, or a storage medium reader, such as a SD (secure digital) card reader and/or a hard disc drive (HDD) and/or a network accessible storage device; at least one communication interface 404 for exchanging data with other modules, devices, systems or equipment. The communication interface 404 can include, but is not limited to, a transceiver configured to transmit and to receive data over a communication network, for example, the network 2. The communication interface 404 can include, but is not limited to, a modem or a network card.

For example, the communication interface 404 enables for instance the processing module 40 to receive the HDR or SDR data and to output HDR or SDR data along with SL-HDR1 metadata and MDCV metadata embedding energy-aware metadata.

The processor 400 is capable of executing instructions loaded into the RAM 401 from the ROM 402, from an external memory (not shown), from a storage medium, or from a communication network. When the processing module 40 is powered up, the processor 400 is capable of reading instructions from the RAM 401 and executing them.

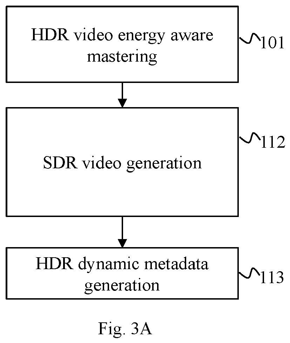

When the processing module 40 is comprised in the video mastering module 10, these instructions form a computer program causing, for example, the implementation by the processor 400 of a process for generating MDCV metadata embedding additional energy-aware metadata according to embodiments described in the following of this document in relation with Fig. 3A.

When the processing module 40 is comprised in the pre-processing module 11, these instructions form a computer program causing, for example, the implementation by the processor 400 of a TM process (when the source module generates a HDR video), of a process of generation of SL-HDR1 metadata.

When the processing module 40 is comprised in the post-processing module 32, these instructions form a computer program causing, for example, the implementation by the processor 400 of a display adaptation process additional based on energy-aware metadata comprised in MDCV metadata according to embodiments described in the following of this document in relation with Fig. 3B.

All or some of the algorithms and steps of said processes may be implemented in software form by the execution of a set of instructions by a programmable machine such as a DSP (digital signal processor) or a microcontroller, or be implemented in hardware form by a machine or a dedicated component such as a FPGA (field-programmable gate array) or an ASIC (application-specific integrated circuit). Microprocessors, DSP, FPGA and ASIC are considered as electronic circuitry.

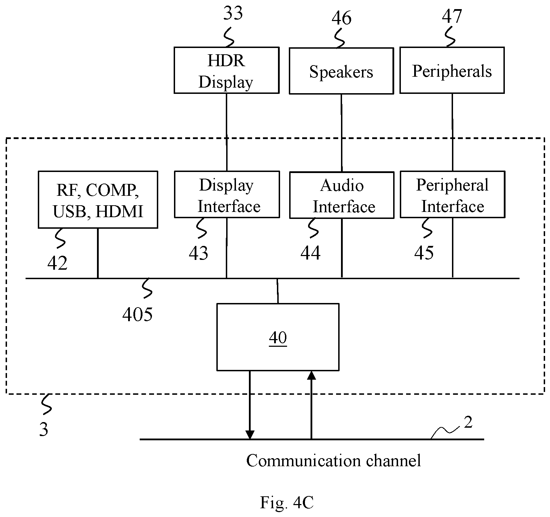

**Fig. 4C** illustrates a block diagram of an example of a system 3 implementing a post processing module in which various aspects and embodiments are implemented.

System 3 can be embodied as a device including various components or modules and is configured to generate a HDR displayable video. Examples of such system include, but are not limited to, various electronic systems such as personal computers, laptop computers, smartphones, tablet, TV, or set top boxes. Components of system 3, singly or in combination, can be embodied in a single integrated circuit (IC), multiple ICs, and/or discrete components. For example, in at least one embodiment, the system 3 comprises one processing module 40 that implements the post-processing module 32. In various embodiments, the system 3 is communicatively coupled to one or more other systems, or other electronic devices, via, for example, a communication bus or through dedicated input and/or output ports.

The input to the processing module 40 can be provided through various input modules as indicated in a block 42. Such input modules include, but are not limited to, (i) a radio frequency (RF) module that receives an RF signal transmitted, for example, over the air by a broadcaster, (ii) a component (COMP) input module (or a set of COMP input modules), (iii) a Universal Serial Bus (USB) input module, and/or (iv) a High Definition Multimedia Interface (HDMI) input module. Other examples, not shown in FIG. 4C, include composite video.

In various embodiments, the input modules of block 42 have associated respective input processing elements as known in the art. For example, the RF module can be associated with elements suitable for (i) selecting a desired frequency (also referred to as selecting a signal, or band-limiting a signal to a band of frequencies), (ii) down-converting the selected signal, (iii) band-limiting again to a narrower band of frequencies to select (for example) a signal frequency band which can be referred to as a channel in certain embodiments, (iv) demodulating the down-converted and bandlimited signal, (v) performing error correction, and (vi) demultiplexing to select the desired stream of data packets. The RF module of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, down-converting the received signal to a lower frequency (for example, an intermediate frequency or a near-baseband frequency) or to baseband. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF module includes an antenna.

Additionally, the USB and/or HDMI modules can include respective interface processors for connecting system 3 to other electronic devices across USB and/or HDMI connections. It is to be understood that various aspects of input processing, for example, Reed-Solomon error correction, can be implemented, for example, within a separate input processing IC or within the processing module 40 as necessary. Similarly, aspects of USB or HDMI interface processing can be implemented within separate interface ICs or within the processing module 40 as necessary. The demodulated, error corrected, and demultiplexed stream is provided to the processing module 40.

Various elements of system 3 can be provided within an integrated housing. Within the integrated housing, the various elements can be interconnected and transmit data therebetween using suitable connection arrangements, for example, an internal bus as known in the art, including the Inter-IC (I2C) bus, wiring, and printed circuit boards. For example, in the system 3, the processing module 40 is interconnected to other elements of said system 3 by the bus 405.

The communication interface 404 of the processing module 40 allows the system 3 to communicate on the communication network 2. The communication network 2 can be implemented, for example, within a wired and/or a wireless medium.

Data is streamed, or otherwise provided, to the system 3, in various embodiments, using a wireless network such as a Wi-Fi network, for example IEEE 802.11 (IEEE refers to the Institute of Electrical and Electronics Engineers). The Wi-Fi signal of these embodiments is received over the communications network 2 and the communications interface 404 which are adapted for Wi-Fi communications. The communications network 2 of these embodiments is typically connected to an access point or router that provides access to external networks including the Internet for allowing streaming applications and other over-the-top communications. Still other embodiments provide streamed data to the system 3 using the RF connection of the input block 42. As indicated above, various embodiments provide data in a non-streaming manner, for example, when the system 3 is a smartphone or a tablet. Additionally, various embodiments use wireless networks other than Wi-Fi, for example a cellular network or a Bluetooth network.

The system 3 can provide an output signal to various output devices using the communication network 2 or the bus 405. For example, the system 3 can provide a reconstructed HDR video.

The system 3 can provide an output signal to various output devices, including the HDR display 33, speakers 46, and other peripheral devices 47. The HDR display 33 of various embodiments includes one or more of, for example, a touchscreen display, an organic light-emitting diode (OLED) display, a curved display, and/or a foldable display. The HDR display 33 can be for a television, a tablet, a laptop, a cell phone (mobile phone), or other devices. The HDR display 33 can also be integrated with other components (for example, as in a smart phone), or separate (for example, an external monitor for a laptop). The other peripheral devices 47 include, in various examples of embodiments, one or more of a stand-alone digital video disc (or digital versatile disc) (DVR, for both terms), a disk player, a stereo system, and/or a lighting system. Various embodiments use one or more peripheral devices 47 that provide a function based on the output of the system 3. For example, a disk player performs the function of playing the output of the system 3.

In various embodiments, control signals are communicated between the system 3 and the HDR display 33, speakers 46, or other peripheral devices 47 using signaling such as AV.Link, Consumer Electronics Control (CEC), or other communications protocols that enable device-to-device control with or without user intervention. The output devices can be communicatively coupled to system 3 via dedicated connections through respective interfaces 43, 44, and 45. Alternatively, the output devices can be connected to system 3 using the communication network 2 via the communication interface 404. The HDR display 33 and speakers 46 can be integrated in a single unit with the other components of system 3 in an electronic device such as, for example, a television. In various embodiments, the display interface 43 includes a display driver, such as, for example, a timing controller (T Con) chip.

The HDR display 33 and speakers 46 can alternatively be separate from one or more of the other components, for example, if the RF module of block 42 is part of a separate set-top box. In various embodiments in which the HDR display 33 and speakers 46 are external components, the output signal can be provided via dedicated output connections, including, for example, HDMI ports, USB ports, or COMP outputs.

**Fig. 4B** illustrates a block diagram of an example of the system 1 adapted to implement the pre-processing module 11 in which various aspects and embodiments are implemented.

System 1 can be embodied as a device including the various components and modules described above and is configured to perform one or more of the aspects and embodiments described in this document.

Examples of such devices include, but are not limited to, various electronic devices such as personal computers, laptop computers, a camera, a smartphone and a server. Elements or modules of system 1, singly or in combination, can be embodied in a single integrated circuit (IC), multiple ICs, and/or discrete components. For example, in at least one embodiment, the system 1 comprises one processing module 40 that implement the pre-processing module 11. In various embodiments, the system 1 is communicatively coupled to one or more other systems, or other electronic devices, via, for example, a communications bus or through dedicated input and/or output ports.

The input to the processing module 40 can be provided through various input modules as indicated in block 42 already described in relation to Fig. 4C.

Various elements of system 1 can be provided within an integrated housing. Within the integrated housing, the various elements can be interconnected and transmit data therebetween using suitable connection arrangements, for example, an internal bus as known in the art, including the Inter-IC (I2C) bus, wiring, and printed circuit boards. For example, in the system 1, the processing module 40 is interconnected to other elements of said system 1 by the bus 405.

The communication interface 404 of the processing module 40 allows the system 1 to communicate on the communication network 2. The communication network 2 can be implemented, for example, within a wired and/or a wireless medium.

Data is streamed, or otherwise provided, to the system 1, in various embodiments, using a wireless network such as a Wi-Fi network, for example IEEE 802.11 (IEEE refers to the Institute of Electrical and Electronics Engineers). The Wi-Fi signal of these embodiments is received over the communications network 2 and the communications interface 404 which are adapted for Wi-Fi communications. The communications network 2 of these embodiments is typically connected to an access point or router that provides access to external networks including the Internet for allowing streaming applications and other over-the-top communications. Still other embodiments provide streamed data to the system 1 using the RF connection of the input block 42. As indicated above, various embodiments provide data in a non-streaming manner.

When a figure is presented as a flow diagram, it should be understood that it also provides a block diagram of a corresponding apparatus. Similarly, when a figure is presented as a block diagram, it should be understood that it also provides a flow diagram of a corresponding method/process.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented, for example, in a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), smartphones, tablets, and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information can include one or more of, for example, estimating the information, calculating the information, predicting the information, retrieving the information from memory or obtaining the information for example from another device, module or from user.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", "one or more of" for example, in the cases of "A/B", "A and/or B" and "at least one of A and B", "one or more of A and B" is intended to encompass the selection of the first listed option (A) only, or the selection of the second listed option (B) only, or the selection of both options (A and B). As a further example, in the cases of "A, B, and/or C" and "at least one of A, B, and C", "one or more of A, B and C" such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

As will be evident to one of ordinary skill in the art, implementations or embodiments can produce a variety of signals formatted to carry information that can be, for example, stored or transmitted. The information can include, for example, instructions for performing a method, or data produced by one of the described implementations or embodiments. For example, a signal can be formatted to carry a SDR image or video sequence, SL-HDRx metadata and MDCV metadata embedding additional energy-aware metadata of a described embodiment. Such a signal can be formatted, for example, as an electromagnetic wave (for example, using a radio frequency portion of spectrum) or as a baseband signal. The formatting can include, for example, encoding a SDR image or video sequence with SL-HDR1 metadata and MDCV metadata embedding additional energy-aware metadata in an encoded stream (i.e., in video data) and modulating a carrier with the encoded stream. The information that the signal carries can be, for example, analog or digital information. The signal can be transmitted over a variety of different wired or wireless links, as is known. The signal can be stored on a processor-readable medium.

As seen above, display adaptation allows displaying a video content compliant with energy-aware information while preserving the artistic intent of the content creator.

A common objective of the various embodiments described in the following is to decrease the consumption of the display device when displaying a video content by controlling a display adaptation process. The use additional energy-aware metadata by the display adaptation process can be forced by the system 3 or can be let to be used by the freely. The use of the additional energy-aware metadata insures finding a best tradeoff between a QoE and a target of display energy reduction. The system 3 may also consider its characteristics and viewing conditions of the video content.

Various embodiments described in the following propose to add additional energy-aware metadata in the current syntax of the MDCV metadata defined in document SMPTE ST 2086 and then to carry the MDCV metadata in a MDCV SEI message defined, as an example, in the ISO/IEC 23002-7 specification.

One can note that the energy-aware information can also be transported by other means such as the User data registered SEI message, defined by Recommendation ITU-T T.35 (02-2000): "Procedure for the allocation of ITU-T defined codes for non-standard facilities" or in Metadata ITU-T T35 OBU specified in AV1 specification (i.e. *metadata_hdr_mdcv* described in AV1 Bitstream & Decoding Process Specification).

A granularity of the transmission of the MDCV metadata embedding the additional energy-aware metadata can be based on time (the MDCV metadata are signaled per period/duration of the video content (e.g. picture, scene cuts, events...)) or based on a distribution of the tones in pictures of the master video content (the MDCV metadata are signaled for the video frames, sequences or cuts depending on the distribution of the tones, i.e., shadows, midtones, highlights, within a scene.

Table TAB1 discloses an insertion of additional energy-aware metadata in the MDCV metadata syntax. In Table TAB1, the additional energy-aware metadata are represented in bold.

Table TAB 1

| Syntax | No. of bits |
|---|---|
| Mastering_display_colour_volume { | |
| for( c = 0; c < 3; c++) { | |
| mdcv_display_primaries_x[ c ] | u(16) |
| mdcv_display_primaries_y[ c ] | u(16) |
| } | |
| mdcv_white_point_x | u(16) |
| mdcv_white_point_y | u(16) |
| mdcv_max_display_mastering_luminance | u(16) |
| mdcv_min_display_mastering_luminance | u(16) |
| **mdcv_energy_reduction_supervised_mode_flag** | **u(1)** |
| **mdcv_display_energy_reduction_max_luminance_num_val** | **u(2)** |
| **for(i=0 ;i < mdcv_display_energy_reduction_max_luminance_num_val; i++){** | |
| **mdcv_display_energy_reduction_rate[ i ]** | **u(5)** |
| **mdcv_display_energy_reduction_max_mastering_luminance_val[ i ]** | **u(16)** |
| **mdcv_display_energy_reduction_video_quality_metric[ i ]** | **u(3)** |
| **mdcv_display_energy_reduction_video_quality_reduction[ i ]** | **u(8)** |
| **}** | |

The value of the syntax element *mdcv_max_display_mastering_luminance* of the original MDCV metadata syntax is a nominal value of a mastering luminance of the master video content. This value is used by the post-processing module 32 if the MDCV metadata don't comprise additional energy-aware metadata and no strategy to reduce the energy consumption when rendering the video is applied.

The semantic of the additional energy-aware metadata is the following:

The flag *mdcv_display_energy_reduction_supervised_mode_flag*, when equal to "1", specifies that a single pair of Display Energy Reduction rate *mdcv_display_energy_reduction_rate[i]* and max mastering luminance value *mdcv_display_energy_reduction_max_mastering_luminance_val[i]* is provided and the receiving and displaying system (here system 3) shall use this pair in its display adaptation process to reduce the display energy consumption. If equal to "0", a list of display Energy Reduction rates *mdcv_display_energy_reduction_rate[i]* and max mastering luminance values *mdcv_display_energy_reduction_max_mastering_luminance_val[i]* is provided allowing the receiving and displaying system (i.e., system 3) to perform its display adaptation process depending on its own energy reduction strategy.

The syntax element *mdcv_display_energy_reduction_max_luminance_num_val* indicates a number of display Energy Reduction rates *mdcv_display_energy_reduction_rate[i]* and max mastering luminance values *mdcv_display_ energy_reduction_max_mastering_luminance_val[i]*. If the flag *mdcv_energy_reduction_supervised_mode_flag* is set to "0", the decoder uses the proposed pairs of Display Energy Reduction Rate *mdcv_display_energy_reduction_rate[i]* and maximal mastering luminance *mdcv_display_energy_reduction_max_mastering_luminance_val[i]* to perform its own Display Energy reduction strategy (i.e. in the display adaptation process).

If the flag *mdcv_energy_reduction_supervised_mode_flag* is set to "1", the video mastering module 10 forces the system 3 to use a single pair of Display Energy Reduction Rate *mdcv_display_energy_reduction_rate[i]* and maximal mastering luminance *mdcv_display_energy_reduction_max_mastering_luminance_val[i]*.

The syntax element *mdcv_display_energy_reduction_rate[i]* indicates a target energy reduction rate in percentage.

The syntax element *mdcv_display_energy_reduction_max_luminance_val[i]* has the same semantic as specified in clause D.3.28 of HEVC specification for the syntax element *max_display_mastering_luminance,* except that the value is coded in units of "1" candela per square meter. It applies to an associated source picture. The value of *mdcv_display_energy_reduction_max_luminance_val[i]* shall be greater than or equal to 125 candela per square meter.

The syntax element *mdcv_display_energy_reduction_video_quality_metric[i]* indicates a quality metric considered by the video mastering module 10 to indicate the reduction of the video quality when the maximal value of the mastering luminance is decreased to perform balancing between the QoE and the energy reduction rate. Table TAB2 indicates possible values of the syntax element *mdcv_display_energy_reduction_video_quality_metric[i].*

Table TAB2

| mdcv_display_energy_reduction_video_quality_metric[i] | |
|---|---|
| 0x00 | PQ-PSNR |
| 0x01 | PQ-SSIM |
| 0x02 | PQ-MS-SSIM |
| 0x03..0x07 | Reserved for future metrics |

The syntax element *mdcv_display_energy_reduction_video_quality_reduction* indicates a percentage of reduction of the selected quality metric when the maximal value of the mastering luminance is decreased to perform balancing between the QoE and the energy reduction rate.

In the following we show how embedding the new MDCV metadata comprising the additional energy-aware metadata in a MDCV SEI message.

As can be seen in table TABS, the in case of use of MPEG codecs (AVC, HEVC, VVC, etc), the general SEI syntax is not modified.

Table TAB3

| | |
|---|---|
| Else if(payloadType == 136) | |
| Time_code(payloadSize) | |
| Else if(payloadType == 137) | |
| Mastering_display_colour_volume(payloadSize) | |
| Else if(pauyloadType == 138) | |

The existing Mastering display colour volume SEI message syntax is enriched with the additional energy-aware metadata, as represented in table TAB4.

Table TAB4

| Mastering_display_colour_volume(payloadSize){ | descriptor |
|---|---|
| for (c=0; c<3; c++) { | |
| Display_primaries_x[c] | u(16) |
| Display_primaries_y[c] | u(16) |

(continued)

| | |
|---|---|
| } | |
| white_point_x | u(16) |
| white_point_y | u(16) |
| max_display_mastering_luminance | u(32) |
| min_display_mastering_luminance | u(32) |
| **src_mdcv_energy_reduction_supervised_mode_flag** | **u(1)** |
| **src_mdcv_display_energy_reduction_max_luminance_num_val** | **u(2)** |
| **for(i=0 ;i< src_mdcv_display_energy_reduction_max_luminance_num_val; i++) {** | |
| **src_mdcv_display_energy_reduction_rate[ i ]** | **u(5)** |
| **src_mdcv_display_energy_reduction_max_mastering_luminance_val[ i ]** | **u(16)** |
| **src_mdcv_display_energy_reduction_video_quality_metric[ i ]** | **u(3)** |
| **src_mdcv_display_energy_reduction_video_quality_reduction[ i ]** | **u(8)** |
| **}** | |

The above syntax can be generalized to other codecs such as VP9 or AV1.

The semantic of *src_mdcv_display_energy_reduction_supervised_mode_flag,*

```
src_mdcv_display_energy_reduction_max_luminance_num_val,
src_mdcv_display_energy_reduction_rate[i],
src_mdcv_display_energy_reduction_max_mastering_luminance_val[i],
src_mdcv_display_energy_reduction_video_quality_metric[i] and
src_mdcv_display_energy_reduction_video_quality_reduction[i] is the same as
respectively the semantic of mdcv_display_energy_reduction_supervised_mode_flag,
mdcv_display_energy_reduction_max_luminance_num_val,
mdcv_display_energy_reduction_rate[i],
mdcv_display_energy_reduction_max_mastering_luminance_val[i],
mdcv_display_energy_reduction_video_quality_metric[i] and
mdcv_display_energy_reduction_video_quality_reduction[i].
```

In the following, modifications of the SL-HDR information SEI message syntax (as specified in annex A.2 of the ETSI TS 103.433 specification) are proposed so that the SL-HDR information SEI message syntax is aligned with the syntax of the MDCV metadata proposed in table TAB1.

As a first embodiment represented in table TABS, the additional energy-aware metadata embedded in the MDCV metadata are added to a section of the SL-HDR information SEI message depending on the syntax element *src_mdcv_info_present_flag.*

Table TAB5

| Syntax | Descriptor |
|---|---|
| sl_hdr_info( payloadSize ) { | |
| itu_t_t35_country_code | b(8) |
| terminal_provider_code | u(16) |
| terminal_provider_oriented_code_message_ide | u(8) |
| sl_hdr_mode_value_minus1 | u(4) |
| sl_hdr_spec_major_version_idc | u(4) |
| sl_hdr_spec_minor_version_idc | u(7) |
| sl_hdr_cancel_flag | u(1) |
| if( !sl_hdr_cancel_flag) { | |
| sl_hdr_persistence_flag | u(1) |

(continued)

| Syntax | Descriptor |
|---|---|
| original_picture_info_present_flag | u(1) |
| target_picture_info_present_flag | u(1) |
| src_mdcv_info_present_flag | u(1) |
| sl_hdr_extension_present_flag | u(1) |
| sl_hdr_payload_mode | u(3) |
| if(original_picture_info_present_flag) { | |
| original_picture_primaries | u(8) |
| original_picture_max_luminance | u(16) |
| original_picture_min_luminance | u(16) |
| } | |
| if( target_picture_info_present_flag) { | |
| target_picture_primaries | u(8) |
| target_picture_max_luminance | u(16) |
| target_picture_min_luminance | u(16) |
| } | |
| if( src_mdcv_info_present_flag) { | |
| for( c = 0; c < 3; c++) { | |
| src_mdcv_primaries_x[ c ] | u(16) |
| src_mdcv_primaries_y[ c ] | u(16) |
| } | |
| src_mdcv_ref_white_x | u(16) |
| src_mdcv_ref_white_y | u(16) |
| src_mdcv_max_mastering_luminance | u(16) |
| **src_mdcv_min_mastering_luminance** | **u(16)** |
| **src_mdcv_energy_reduction_supervised_mode_flag** | **u(1)** |
| **src_mdcv_display_energy_reduction_max_luminance_num_val** | **u(2)** |
| **for(i=0 ;i < ; i++){** | |
| **src_mdcv_display_energy_reduction_rate[ i ]** | **u(5)** |
| **src_mdcv_display_energy_reduction_max_mastering_luminance_val[ i ]** | **u(16)** |
| **src_mdcv_display_energy_reduction_video_quality_metric[ i ]** | **u(3)** |
| **src_mdcv_display_energy_reduction_video_quality_reduction[ i ]** | **u(8)** |
| **}** | |
| } | |
| for( i = 0; i < 4; i++) | |
| matrix_coefficient_value[ i ] | u(16) |
| for( i = 0; i < 2; i++) | |
| chroma_to_luma_injection[ i ] | u(16) |
| for( i = 0; i < 3; i++) | |
| k_coefficient_value[ i ] | u(8) |

(continued)

| Syntax | Descriptor |
|---|---|
| if( sl_hdr_payload_mode = = 0 ) { | |
|     tone_mapping_input_signal_black_level_offset | u(8) |
|     tone_mapping_input_signal_white_level_offset | u(8) |
|     shadow_gain_control | u(8) |
|     highlight_gain_control | u(8) |
|     mid_tone_width_adjustment_factor | u(8) |
|     tone_mapping_output_fine_tuning_num_val | u(4) |
|     saturation_gain_num_val | u(4) |
|     for( i = 0; i < tone_mapping_output_fine_tuning_num_val; i++) { | |
|         tone_mapping_output_fine_tuning_x[ i ] | u(8) |
|         tone_mapping_output_fine_tuning_y[ i ] | u(8) |
|     } | |
|     for( i = 0; i < saturation_gain_num_val; i++) { | |
|         saturation_gain_x[ i ] | u(8) |
|         saturation_gain_y[ i ] | u(8) |
|     } | |
|   } | |
|   else if( sl_hdr_payload_mode = = 1 ) { | |
|     lm_uniform_sampling_flag | u(1) |
|     luminance_mapping_num_val | u(7) |
|     for( i = 0; i < luminance_mapping_num_val; i++) { | |
|         if( !lm_uniform_sampling_flag) | |
|           luminance_mapping_x[ i ] | u(16) |
|         luminance_mapping_y[ i ] | u(16) |
|     } | |
|     cc_uniform_sampling_flag | u(1) |
|     colour_correction_num_val | u(7) |
|     for( i = 0; i < colour_correction_num_val; i++) { | |
|         if( !cc_uniform_sampling_flag) | |
|           colour_correction_x[ i ] | u(16) |
|         colour_correction_y[ i ] | u(16) |
|     } | |
|   } | |
|   if( GamutMappingEnabledFlag) { | |
|     gamut_mapping_mode | u(8) |
|     if (gamut_mapping_mode = = 1) | |
|       gamut_mapping_params() | |
|   } | |
|   if( sl_hdr_extension_present_flag) { | |

(continued)

| Syntax | Descriptor |
|---|---|
| sl_hdr_extension_6bits | u(6) |
| sl_hdr_extension_length | u(10) |
| for( i = 0; i < sl_hdr_extension_length; i++ ) | |
| sl_hdr_extension_data_byte[ i ] | u(8) |
| } | |
| } | |
| } | |

In another embodiment, the syntax element *mdcv_energy_reduction_supervised_mode_flag* is cancelled from the syntax of table TAB1 (*src_mdcv_energy_reduction_supervised_mode_flag* is cancelled from the syntax of tables TAB4 and TABS) and in that case the video mastering module 10 can't force the use of a pair of of Display Energy Reduction rate *mdcv_display_energy_reduction_rate[i]* and max mastering luminance value *mdcv_display_energy_re duction_max_mastering_luminance_val[i].* Depending on the energy reduction strategy of the receiving and displaying system (here system 3), the pair is (or the pairs are) used or not.

In another embodiment, the part of the SL-HDR information SEI message depending on the flag *sl_hdr_extension_present_flag* is used to introduce the additional energy-aware metadata corresponding to the bold part in table TAB4. In this part of the SL-HDR information SEI message, the flag *sl_hdr_extension_6bits* defines a content of an extension data block. *sl_hdr_extension_6bits* = 0 is already defined in the current ETSI TS 103 433 specification. It is proposed to set the value of the flag *sl_hdr_extension_6bits* to "1" or any other value than "0" to signal the additional energy aware metadata in the corresponding *sl_hdr_extension_data_byte* fields.

This case is exclusive, i.e., it is not possible to have the field *sl_hdr_extension_data_byte* gathering the additional energy-aware metadata for *sl_hdr_extension_6bits* set to "0" and "1" in a same SL-HDR information SEI message.

In another embodiment, a possibility is to consider the *sl_hdr_extension_6bits* as a bit mask field. The value "0" for this field allows to keep compatibility with the current versions of the ETSI TS 103 433 specification. The other values of *sl_hdr_extension_6bits* (i.e. "1" to "63") allows to concatenate multiple blocks of data bytes of different types such as for example the additional energy-aware metadata. Each data block starts with a block size field and an identifier value as shown in Table 6.

Table TAB6

| | |
|---|---|
| **extension_data_block_size** | u(8) |
| **extension_data_block_ID** | u(8) |
| **for( i = 0; i < (extension_data_block_size - 2) ; i++){** | |
| **Extension_block_data[i]** | u(8) |
| **}** | |
| **...** | |
| **extension_data_block_size** | u(8) |
| **extension_data_block_ID** | u(8) |
| **for( i = 0; i < (extension_data_block_size - 2) ; i++) {** | |
| **Extension_block_data[i]** | u(8) |
| **}** | |
| **...** | |
| **extension_data_block_size** | u(8) |
| **extension_data_block_ID** | u(8) |
| **for( i = 0; i < (extension_data_block_size - 2) ; i++){** | |
| **extension_block_data[i]** | u(8) |

(continued)

| | |
|---|---|
| **}** | |

The syntax element *extension_data_block_ID* is an "8" bit field and, as an example, the possible values are defined in the Table 7.

Table TAB7

| extension_data_block_ID | Data_block name |
|---|---|
| 0 | private data |
| **1** | **Additional energy aware metadata** |
| 2..254 | For future use |

As an example, if the *sl_hdr_extension_6bits* =1, the *sl_hdr_extension_data_byte* field contains bytes corresponding to private data and bytes corresponding to the additional energy-aware metadata as represented in table TAB8.

Table TAB8

| Syntax | No. of bits |
|---|---|
| extension_data_block_size | u(8) |
| extension_data_block_ID | u(8) |
| sl_hdr_PrivateData_bytes() | u(n) |
| extension_data_block_size | u(8) |
| extension_data_block_ID | u(8) |
| src_mdcv_display_energy_reduction_supervised_mode_flag | u(1) |
| src_mdcv_display_energy_reduction_num_val | u(2) |
| for(i=0 ;i < src_mdcv_display_energy_reduction_num_val; i++) { | |
|    src_mdcv_display_energy_reduction_rate[ i ] | u(5) |
|    src_mdcv_display_energy_reduction_max_luminance_val[ i ] | u(16) |
|    src_mdcv_display_energy_reduction_video_quality_metric[ i ] | u(3) |
|    src_mdcv_display_energy_reduction_video_quality_reduction[ i ] | u(8) |
| } | |

In another embodiment, we propose, in case the flag *src_mdcv_info_present_flag* is set to "1" to create three new fields in the extension part of the SL-HDR information SEI syntax depending on the syntax element *sl_hdr_extension_present_flag* to separate the bytes of the additional energy aware metadata and the existing ones in the current versions of the ETSI TS 103 433 specification, as shown in the table TAB9

Table TAB9

| Syntax | Descri ptor |
|---|---|
| sl_hdr_info( payloadSize ) { | |
|     itu_t_t35_country_code | b(8) |
|     terminal_provider_code | u(16) |
|     terminal_provider_oriented_code_message_idc | u(8) |
|     sl_hdr_mode_value_minus1 | u(4) |
|     sl_hdr_spec_major_version_idc | u(4) |
|     sl_hdr_spec_minor_version_idc | u(7) |
|     sl_hdr-cancel_flag | u(1) |
|     if( !sl_hdr_cancel_flag ) { | |

(continued)

| Syntax | Descri ptor |
|---|---|
| sl_hdr_persistence_flag | u(1) |
| original_picture_info_present_flag | u(1) |
| target_picture_info_present_flag | u(1) |
| src_mdcv_info_present_flag | u(1) |
| sl_hdr_extension_present_flag | u(1) |
| sl_hdr_payload_mode | u(3) |
| if(original_picture_info_present_flag) { | |
| original_picture_primaries | u(8) |
| original_picture_max_luminance | u(16) |
| original_picture_min_luminance | u(16) |
| } | |
| if( target_picture_info_present_flag) { | |
| target_picture_primaries | u(8) |
| target_picture_max_luminance | u(16) |
| target_picture_min_luminance | u(16) |
| } | |
| if( src_mdcv_info_present_flag ) ζ | |
| for( c = 0; c < 3; c++) { | |
| src_mdcv_primaries_x[ c ] | u(16) |
| src_mdcv_primaries_y[ c ] | u(16) |
| } | |
| src_mdcv_ref_white_x | u(16) |
| src_mdcv_ref_white_y | u(16) |
| src_mdcv_max_mastering_luminance | u(16) |
| src_mdcv_min_mastering_luminance | u(16) |
| } | |
| for( i = 0; i < 4; i++) | |
| matrix_coefficient_value[ i ] | u(16) |
| for( i = 0; i < 2; i++) | |
| chroma_to_luma_injection[ i ] | u(16) |
| for( i = 0; i < 3; i++) | |
| k_coefficient_value[ i ] | u(8) |
| if( sl_hdr_payload_mode = = 0 ) { | |
| tone_mapping_input_signal_black_level_offset | u(8) |
| tone_mapping_input_signal_white_level_offset | u(8) |
| shadow_gain_control | u(8) |
| highlight_gain_control | u(8) |
| Syntax | Descri ptor |
| mid_tone_width_adjustment_factor | u(8) |

(continued)

| Syntax | Descri ptor |
|---|---|
| tone_mapping_output_fine tuning_num_val | u(4) |
| saturation_gain_num_val | u(4) |
| for( i = 0; i < tone_mapping_output_fine_tuning_num_val; i++) { | |
| tone_mapping_output_fine_tuning_x[ i ] | u(8) |
| tone_mapping_output_fine_tuning_y[ i ] | u(8) |
| } | |
| for( i = 0; i < saturation_gain_num_val; i++) { | |
| saturation_gain_x[ i ] | u(8) |
| saturation_gain_y[ i ] | u(8) |
| } | |
| } | |
| else if( sl_hdr_payload_mode = = 1 ) { | |
| lm_uniform_sampling_flag | u(1) |
| luminance_mapping_num_val | u(7) |
| for( i = 0; i < luminance_mapping_num_val; i++) { | |
| if( !lm_uniform_sampling_flag) | |
| Syntax | Descri ptor |
| luminance_mapping_x[ i ] | u(16) |
| luminance_mapping_y[ i ] | u(16) |
| } | |
| cc_uniform_sampling_flag | u(1) |
| colour_correction_num_val | u(7) |
| for( i = 0; i < colour_correction_num_val; i++) { | |
| if( !cc_uniform_sampling_flag) | |
| colour_correction_x[ i ] | u(16) |
| colour_correction_y[ i ] | u(16) |
| } | |
| } | |
| if( GamutMappingEnabledFlag ) { | |
| gamut_mapping_mode | u(8) |
| if (gamut_mapping_mode = = 1) | |
| gamut_mapping_params( ) | |
| } | |
| if( sl_hdr_extension_present_flag) { | |
| sl_hdr_extension_6bits | u(6) |
| sl_hdr_extension_length | u(10) |
| for( i = 0; i < sl_hdr_extension_length; i++ ) | |
| sl_hdr_extension_data_byte[ i ] | u(8) |
| **if( src_mdcv_info_present_flag) {** | |

(continued)

| Syntax | Descri ptor |
|---|---|
| sl_hdr_energy_src_mdcv_extension_flag | u(1) |
| sl_hdr_energy_src_mdcv_extension_length | u(10) |
| for( i = 0; i < sl_hdr_energy_src_mdcv_extension_length; i++ ) | |
| sl_hdr_energy_src_mdcv_extension_data_byte[ i ] | u(8) |
| } | |
| } | |
| } | |
| } | |

In that case, the field *sl_hdr_energy_src_mdcv_extension_data_bytes* corresponds to a syntax described in the Table TAB10.

The flag *sl_hdr_energy_src_mdcv_extension_flay* indicates whether the SL-HDR information SEI message comprises additional energy aware metadata of the MDCV metadata.

The syntax element *sl_hdr_energy_src_mdcv_extension_length* indicates the length of the additional energy aware metadata of the MDCV metadata.

The syntax element sl_hdr_energy_src_mdcv_extension_data_byte[ i ] represent one occurrence of the additional energy aware metadata of the MDCV metadata of table TAB10.

Table TAB10

| Syntax | No. of bits |
|---|---|
| src_mdcv_display_energy_reduction_supervised_mode_flag | u(1) |
| src_mdcv_display_energy_reduction_num_val | u(2) |
| for(i=0 ; i < src_mdcv_display_energy_reduction_num_val; i++){ | |
| src_mdcv_display_energy_reduction_rate[ i ] | u(5) |
| src_mdcv_display_energy_reduction_max_luminance_val[ i ] | u(16) |
| src_mdcv_display_energy_reduction_video_quality_metric[ i ] | u(3) |
| src_mdcv_display_energy_reduction_video_quality_reduction[ i ] } | u(8) |

**Fig. 3A** illustrates schematically a process of generation of the additional energy-aware information.

The process of Fig. 3A is executed on the system 1.

In a step 101, the processing module 40 of the video mastering module 10 determines additional energy aware metadata and inserts the additional energy aware metadata in MDCV metadata. The MDCV metadata comprising the additional energy aware metadata are determined by analyzing a distribution of the tones of the master video content, i.e., shadows, midtones, highlights. From this analysis, nominal maximal mastering luminance values are determined to insure balancing between artist intent and energy reduction rates while rendering the HDR video on a display under the control of the artist. For example, Deep learning method can be used to perform a such analysis.

In a step 112, the processing module 40 of the pre-processing module 11 generates the SDR video from the master video content as described in relation to the pre-processing module 11 in Fig. 2.

In a step 113, the processing module 40 of the pre-processing module 11 generates the SL-HDR1 metadata (i.e., the HDR signal reconstruction dynamic metadata). The SDR video is intended to be encoded according to a video format such as AVC, HEVC, VVC, AV1,VP9, EVC in video data. The SL-HDR1 metadata are intended to be encoded in the same video data by the encoding module 12 in the form of at least one SL-HDR information SEI message. The MDCV metadata comprising the additional energy-aware metadata are also intended to be encoded in the same video data in the form of a MDCV SEI message and optionally in the SL-HDR information SEI message comprising the SL-HDR1 metadata.

In an embodiment, during the distribution of the video data comprising the encoded SDR video, SL-HDR1 metadata and MDCV metadata comprising the additional energy-aware metadata, the video data may pass through a node (e.g. edge entity) of the network 2 that modifies (i.e., updates) the additional energy-aware information comprised in the MDCV SEI message (and eventually the same additional energy-aware metadata comprised in the SL-HDR information SEI message) or inserts additional energy-aware metadata in the MDCV SEI message (and eventually inserts the same additional energy-aware metadata in the SL-HDR information SEI message). The node then transmits the video data in direction of the receiving system 3. To do so, the node may comprise its own video mastering module eventually controlled by an artist.

The embodiment of Fig. 3A is in the context of a distribution of a video with SL-HDRx metadata. In another embodiment it is also possible to distribute video data with MDCV metadata comprising energy aware metadata but without SL-HDRx metadata. For exemple, in this embodiment, a HDR video is distributed with MDCV metadata, the MDCV metadata being encoded in a MDCV SEI message.

**Fig. 3B** illustrates schematically a process of use of the additional energy-aware information for generating a HDR video.

The process of Fig. 3B is executed by the processing module 40 implementing the post-processing module 32.

In a step 320 the processing module 40 obtains a decoded version of the SDR video, of the SL-HDR information SEI message and of the MDCV SEI message.

In a step 321, the processing module 40 determines if the flag *src_mdcv_info_present_flag* of the SL-HDR information SEI message is equal to one.

If the flag *src_mdcv_info_present_flag*=1*,* the additional energy aware metadata are at least in the SL-HDR information SEI message and optionally in the MDCV SEI message. In that case, in a step 322, the processing module 40 uses the SL-HDR information SEI message to reconstruct the HDR video and to retrieve the additional energy aware metadata and maps these additional energy aware metadata to the *hdrDisplayColorSpace* syntax as defined in the ETSI TS 103 433 specification.

If the *flag_src_mdcv_info_present_flag*=0, the additional energy aware metadata are only in the MDCV SEI message. In that case, in a step 323, the processing module 40 uses the SL-HDR information SEI message to reconstruct the HDR video and the MDCV SEI message to retrieve the additional energy aware metadata and maps these additional energy aware metadata to the *hdrDisplayColorSpace* syntax.

In a step 324, the processing module 40 extracts a maximal mastering luminance value to be used for display adaptation from the additional energy aware metadata mapped into the *hdrDisplayColorSpace* syntax. The processing module 40 then derives a target peak luminance value $L_{pdisp}$ from the maximal mastering luminance value.

In step 325, the processing module 40 modifies the reconstructed HDR video into a HDR video compliant with a target peak luminance value $L_{pdisp}$ derived from the maximal mastering luminance value. For instance, the processing module 40 applies the display adaptation process described in annex E of ETSI TS 103 433. During step 325, the processing module 40 determines a TM function (for example, in the form of a LUT) allowing transforming the reconstructed HDR video in a HDR video compliant with the target peak luminance value $L_{pdisp}$ taking account current energy constraints of the receiver system 3, an energy budget of the receiver system 3 and a QoE expected by a user. Then, the processing module 40 applies the display adaptation process on the HDR video reconstructed in steps 322 or 323 using the TM function.

In a step 326, the processing module 40 sends the display adapted HDR video to the HDR display 33.

Until now in this document, steps 320 to 326 are implemented by the post-processing module 32. In a variant, only step 320 to 323 are implemented by the post-processing module 32. Steps 324 to 326 are implemented by an independent module dedicated to the display adaptation.

As the embodiment of Fig. 3A, the embodiment of Fig. 3B is in the context of a distribution of a video with SL-HDRx metadata. We have seen however that video data can be distributed with MDCV metadata but without SL-HDRx metadata. For example, in that case, a HDR video is obtained in step 320. Step 320 is followed directly by step 324. In step 324, the processing module 40 extracts the maximal mastering luminance value to be used for display adaptation from the additional energy aware metadata comprised in the MDCV metadata, the MDCV metadata being comprised in the MDCV SEI message only. Step 324 is followed by steps 325 and 326 already explained.

We described above a number of embodiments. Features of these embodiments can be provided alone or in any combination. Further, embodiments can include one or more of the following features, devices, or aspects, alone or in any combination, across various claim categories and types:

- A TV, set-top box, cell phone, tablet, personal computer or other electronic device that performs at least one of the embodiments described, and that displays (e.g., using a monitor, screen, or other type of display) a resulting picture.

- A TV, set-top box, cell phone, tablet, personal computer or other electronic device that tunes (e.g., using a tuner) a channel to receive a signal including an encoded SDR video and metadata, and performs at least one of the embodiments described.

- A TV, set-top box, cell phone, tablet, or other electronic device that receives (e.g., using an antenna) a signal over the air that includes an encoded SDR video and metadata, and performs at least one of the embodiments described.

- A server, camera, cell phone, tablet, personal computer or other electronic device that tunes (e.g., using a tuner) a channel to transmit a signal including a SDR video and metadata, and performs at least one of the embodiments described.

- A server, camera, cell phone, tablet, personal computer or other electronic device that transmits (e.g., using an antenna) a signal over the air that includes a SDR video and metadata, and performs at least one of the embodiments described.

**Claims**

1. A method comprising:
   determining (101) energy aware metadata and inserting the energy aware metadata in Mastering Display Colour Volume metadata, the Mastering Display Colour Volume metadata being determined by analyzing a distribution of tones of a master video content, the energy aware metadata allowing controlling an energy consumed for displaying a second video representative of the master video content; and encoding a first video representative of the master video content and the Mastering Display Colour Volume metadata into video data, the Mastering Display Colour Volume metadata being encoded in a Mastering Display Colour Volume SEI message.

2. The method of claim 1 wherein the first video is a standard dynamic range video generated (112) from the master video content and the second video is a high dynamic range video and the method further comprises generating (113) additional metadata allowing transforming the standard dynamic range video into the high dynamic range video and encoding the additional metadata in a SL-HDR information SEI message.

3. The method of claim 2 wherein, responsive to a first value of a flag of the SL-HDR information SEI message, data representing the Mastering Display Colour Volume metadata are encoded in the SL-HDR information SEI message.

4. The method according to claim 1, 2 or 3 wherein the Mastering Display Colour Volume metadata are signaled per period or per picture or per set of pictures of the master video content or depending on scene cuts or events in the master video content or based on a distribution of the tones in pictures of the master video content.

5. A method comprising:

   receiving video data comprising Mastering Display Colour Volume metadata;
   modifying or introducing energy aware metadata in the Mastering Display Colour Volume metadata; and
   transmitting the video data with the Mastering Display Colour Volume metadata.

6. A method comprising:

   obtaining (320) a first video and a MDCV SEI message from video data, the MDCV SEI message comprising Mastering Display Colour Volume metadata comprising energy aware metadata, the energy aware metadata allowing controlling an energy consumed for displaying the first video;
   deriving (324) a target peak luminance value from the energy aware metadata; and
   applying (325) a display adaptation process to the first video based on the determined target peak luminance value to obtain a second video.

7. The method of claim 6 wherein, the first video is a first high dynamic range video reconstructed from a standard dynamic range video using additional metadata allowing transforming the standard dynamic range video into the first high dynamic range video, the additional metadata being obtained from a SL-HDR information SEI message, and the second video is a second high dynamic range video.

8. The method of claim 7 wherein, responsive to a first value of a flag of the SL-HDR information SEI message, data representing the Mastering Display Colour Volume metadata are encoded in the SL-HDR information SEI message.

9. A device comprising electronic circuitry configured for:

   determining (101) energy aware metadata and inserting the energy aware metadata in Mastering Display Colour Volume metadata, the Mastering Display Colour Volume metadata being determined by analyzing a distribution of tones of a master video content, the energy aware metadata allowing controlling an energy consumed for displaying a second video representative of the master video content; and

encoding a first video representative of the master video content and the Mastering Display Colour Volume metadata into video data, the Mastering Display Colour Volume metadata being encoded in a Mastering Display Colour Volume SEI message.

10. The device of claim 9 wherein the first video is a standard dynamic range video generated (112) from the master video content and the second video is a high dynamic range video and the electronic circuitry is further configured for generating (113) additional metadata allowing transforming the standard dynamic range video into the high dynamic range video and encoding the additional metadata in a SL-HDR information SEI message.

11. The device of claim 10 wherein, responsive to a first value of a flag of the SL-HDR information SEI message, data representing the Mastering Display Colour Volume metadata are encoded in the SL-HDR information SEI message.

12. The device according to claim 9, 10 or 11 wherein the Mastering Display Colour Volume metadata are signaled per period or per picture or per set of pictures of the master video content or depending on scene cuts or events in the master video content or based on a distribution of the tones in pictures of the master video content.

13. A device comprising electronic circuitry configured for:

receiving video data comprising Mastering Display Colour Volume metadata;
modifying or introducing energy aware metadata in the Mastering Display Colour Volume metadata;
and transmitting the video data with the Mastering Display Colour Volume metadata.

14. A device comprising electronic circuitry configured for:

obtaining (320) a first video and a MDCV SEI message from video data, the MDCV SEI message comprising Mastering Display Colour Volume metadata comprising energy aware metadata, the energy aware metadata allowing controlling an energy consumed for displaying the first video;
deriving (324) a target peak luminance value from the energy aware metadata; and
applying (325) a display adaptation process to the first video based on the determined target peak luminance value to obtain a second video.

15. The device of claim 14 wherein, the first video is a first high dynamic range video reconstructed from a standard dynamic range video using additional metadata allowing transforming the standard dynamic range video into the first high dynamic range video, the additional metadata being obtained from a SL-HDR information SEI message, and the second video is a second high dynamic range video.

Fig. 1

Fig. 2

Fig. 3A

```
┌─────────────────────────────┐
│   Obtaining reconstructed   │ ⌇320
│        video data           │
└─────────────────────────────┘
              │
              ▼
      ╱───────────────────╲
     ╱ src_mdcv_info_present_flag ╲ ⌇321
     ╲        = 1?         ╱
      ╲───────────────────╱
       │                 │
       ▼                 ▼
┌──────────────────┐  ┌──────────────────┐
│ HDR reconstruction + │ │ HDR reconstruction + │
│ energy aware metadata from │⌇322 │ energy aware metadata from │⌇323
│    SL-HDR SEI    │  │     MDCV SEI     │
└──────────────────┘  └──────────────────┘
       │                 │
       └────────┬────────┘
                ▼
      ┌──────────────────┐
      │  Applying HDR energy │ ⌇324
      │  reduction process   │
      └──────────────────┘
                │
                ▼
      ┌──────────────────┐
      │ Display adaptation │ ⌇325
      └──────────────────┘
                │
                ▼
      ┌──────────────────────┐
      │ Send HDR video to display │ ⌇326
      └──────────────────────┘
```

Fig. 3B

| 400 CPU | 401 RAM | 402 ROM |
| 403 | 404 | 40 |

405

Fig. 4A

RF, COMP, USB, HDMI

42

405

40

1

41

Communication channel

Fig. 4B

33      46      47

| HDR Display | Speakers | Peripherals |

| RF, COMP, USB, HDMI | Display Interface | Audio Interface | Peripheral Interface |

42      43      44      45

405

40

3

2

Communication channel

Fig. 4C

**EUROPEAN SEARCH REPORT**

Application Number

EP 24 30 5459

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MEUR OLIVIER LE ET AL: "Energy-Aware HDR Content End-to-End VVC Encoding", 2023 IEEE 25TH INTERNATIONAL WORKSHOP ON MULTIMEDIA SIGNAL PROCESSING (MMSP), IEEE, 27 September 2023 (2023-09-27), pages 1-2, XP034484680, DOI: 10.1109/MMSP59012.2023.10337641 [retrieved on 2023-12-08] * the whole document * | 1-15 | INV. G09G5/10 H04N19/46 |
| A | ETSI SECRETARIAT: "Final Draft - RTS/JTC-059-1 v1.3.7 (TS 103 433-1 ) SL-HDR1", ETSI DRAFT; BROADCAST(21)000025, EUROPEAN TELECOMMUNICATIONS STANDARDS INSTITUTE (ETSI), 650, ROUTE DES LUCIOLES ; F-06921 SOPHIA-ANTIPOLIS ; FRANCE , vol. JTC BROADCAS EBU/CENELEC/ETSI on Broadcasting, no. 1.3.7 22 June 2021 (2021-06-22), pages 1-136, XP014399495, Retrieved from the Internet: URL:ftp://docbox.etsi.org/Broadcast/Broadc ast/05-CONTRIBUTIONS/2021/BROADCAST(21)000 025_Final_Draft_-_RTS_JTC-059-1__v1_3_6__T S_103_433-1_____SL-HDR1.zip JTC-059-1v137.docx [retrieved on 2021-06-22] * paragraph [0010] - paragraph [0055] * | 1-15 | |
| A | WO 2024/023008 A1 (INTERDIGITAL CE PATENT HOLDINGS SAS [FR]) 1 February 2024 (2024-02-01) * page 1 - page 35 * | 1-15 | TECHNICAL FIELDS SEARCHED (IPC) H04N G09G |

The present search report has been drawn up for all claims

| Place of search | Date of completion of the search | Examiner |
|---|---|---|
| Munich | 13 August 2024 | Njibamum, David |

EPO FORM 1503 03.82 (P04C01)

## ANNEX TO THE EUROPEAN SEARCH REPORT
## ON EUROPEAN PATENT APPLICATION NO.

EP 24 30 5459

This annex lists the patent family members relating to the patent documents cited in the above-mentioned European search report.
The members are as contained in the European Patent Office EDP file on
The European Patent Office is in no way liable for these particulars which are merely given for the purpose of information.

13-08-2024

| Patent document cited in search report | Publication date | Patent family member(s) | Publication date |
|---|---|---|---|
| WO 2024023008 A1 | 01-02-2024 | NONE | |

EPO FORM P0459

For more details about this annex : see Official Journal of the European Patent Office, No. 12/82